# EUROPEAN PATENT APPLICATION

(11) **EP 3 487 037 A1**
(43) Date of publication of application: **22.05.2019**
(21) Application number: 18206598.7
(22) Date of filing: 15.11.2018
(51) Int. Cl.: H02J 50/12

(54) **WIRELESS BATTERY CHARGER WITH AUTOMATIC IMPEDANCE CHARACTERIZATION AND FREQUENCY ADJUSTMENT**

(30) Priority: 17.11.2017 US 201762588052 P; 25.09.2018 US 201816140700
(71) Applicant: Aptiv Technologies Limited, St. Michael (BB)
(72) Inventor: BOLLINGER, Patrick, J, Warren, Ohio 44481 (US)
(74) Representative: Westphal, Mussgnug & Partner Patentanwälte mbB

(57) **Abstract**

An electrical charging system (10) configured to wirelessly charge an energy storage device (12) having a power supply (16) configured to source electrical power having a frequency, a source coil (18) in electrically coupled with the power supply (16) and configured to generate an alternating magnetic field (20), a capture coil (22) magnetically coupled to the source coil (18), thereby inducing the capture coil (22) to capture electrical power from the alternating magnetic field (20), a variable resistor (38) switchably coupled to the capture coil (22) configured to provide a variable resistive load to the capture coil (22), and controller circuitry (30) communicatively coupled with the power supply (16) and configured to command the variable resistor (38) to vary a resistance of the variable resistor (38) and configured to command the power supply (16) to vary the frequency of the electrical power and a method (100) of operating same.

## Description

### TECHNICAL FIELD OF THE INVENTION

The invention relates to a wireless battery charger, particularly to a wireless battery charger with that can automatically characterize impedance of a source coil and capture coil and adjust the frequency of the electrical power applied to a source coil.

### BRIEF DESCRIPTION OF THE SEVERAL VIEWS OF THE DRAWING

The present invention will now be described, by way of example with reference to the accompanying drawings, in which:
Fig. 1 is a schematic diagram of an electrical charging system according to one embodiment;
Fig. 2 is pictorial side view of the electrical charging system of Fig. 1 according to one embodiment;
Fig. 3 is an alternate schematic diagram of the electrical charging system of Fig. 1 according to one embodiment; and
Fig. 4 is a flowchart for a method of controlling an electrical charging system according to another embodiment.

### DETAILED DESCRIPTION OF THE INVENTION

The electrical charging system presented herein is configured to wirelessly charge an energy storage device, such as a battery in a vehicle or portable electronic device. Electrical power is wirelessly transferred from a power supply to the energy storage device by a source coil connected to the power supply that generates a magnetic field received by a capture coil connected to the energy storage device. The optimum operating frequency of the power supply may vary due to differences in the position of the capture coil relative to the source coil or from differences in electrical characteristics between different capture coils.

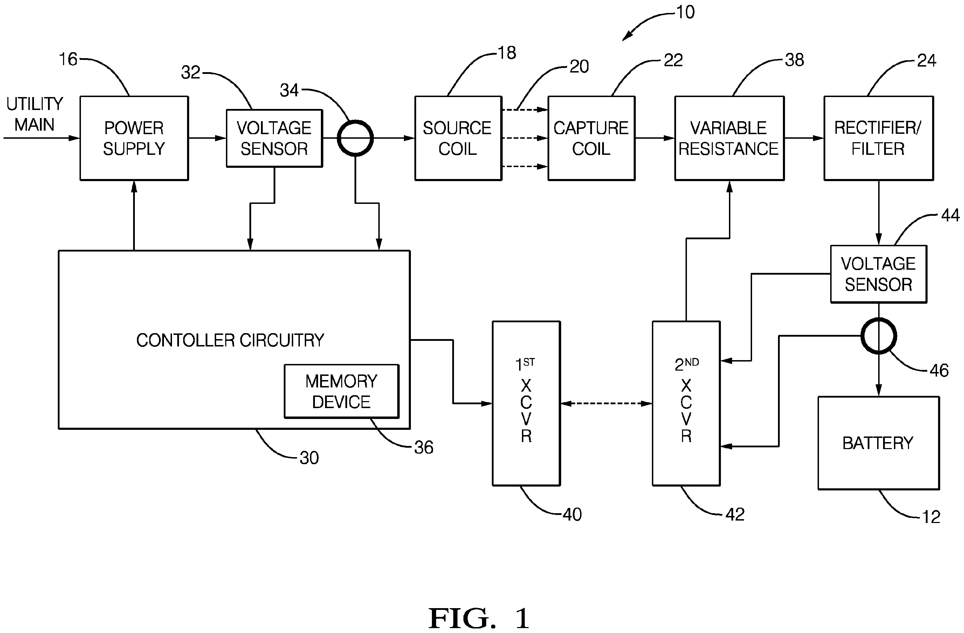

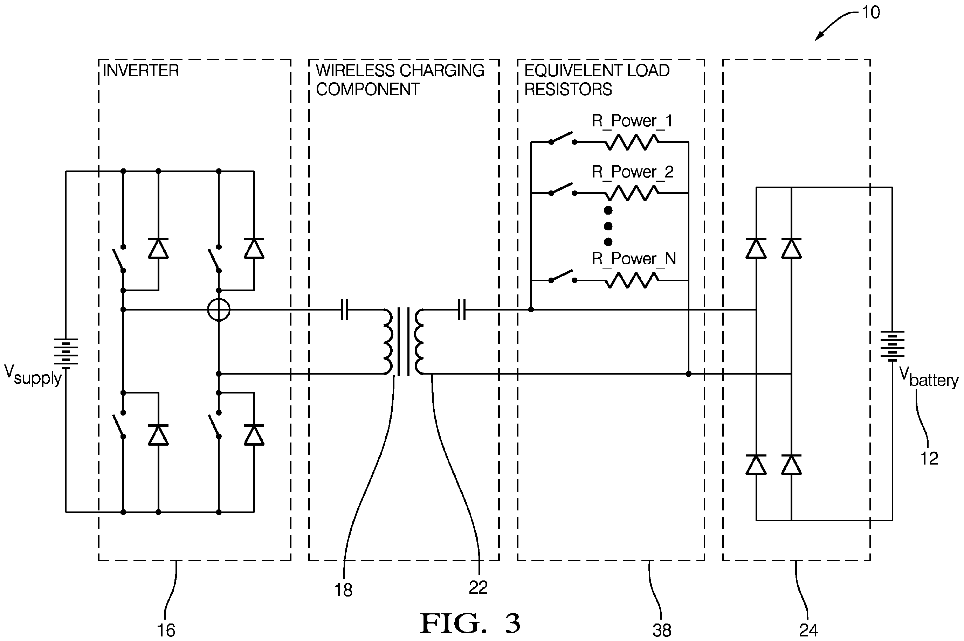

Figs. 1-3 illustrate an example of an electrical charging system 10, according to an embodiment of the invention, hereinafter referred to as the system 10. In this example, the system 10 is configured to wirelessly charge an energy storage device, such as a battery 12 in an electric or hybrid electric vehicle 14 as shown in Fig. 1.

According to this example, a charging station portion of the system 10 is located external to the vehicle 14 includes an electrical power supply 16 that is connected to an electrical power source, in this example a utility main providing electrical power to the power supply 16 at 240 VAC at 50-60 Hz. The power supply 16 includes an inverter (not shown) that produces an alternating current (AC) voltage within a frequency range of 81 to 90 kilohertz (kHz). The output frequency of the power supply 16 can be adjusted based on an input signal from an external device. In a high power output mode, the power supply 16 supplies electrical power in a range of more than 1 kilowatt (kW). The power output mode of the power supply 16 is selected based on an input signal from an external device, such as controller circuitry.

The power supply 16 is electrically coupled to the power source. As used herein and throughout, electrically coupled means that named devices are connected by a wire conductor. The alternating electrical power supplied to a source coil 18 by the power supply 16 causes the source coil 18 to generate a magnetic field 20. A capture coil 22 is placed within this magnetic field 20 and the magnetic field 20 induces an alternating electrical current in the capture coil 22, thus converting the magnetic energy in the magnetic field 20 to electrical energy.

The frequency of the electrical power output from the power supply 16 is variable and is controlled to improve magnetic coupling between the source coil 18 and the capture coil 22 because the coupling characteristics and resonant frequency between the source coil 18 and capture coil 22 may change each time the system 10 is used due to variations in location of the capture coil 22 relative to the source coil 18 and/or a different capture coil having different characteristics attached to a different vehicle being used.

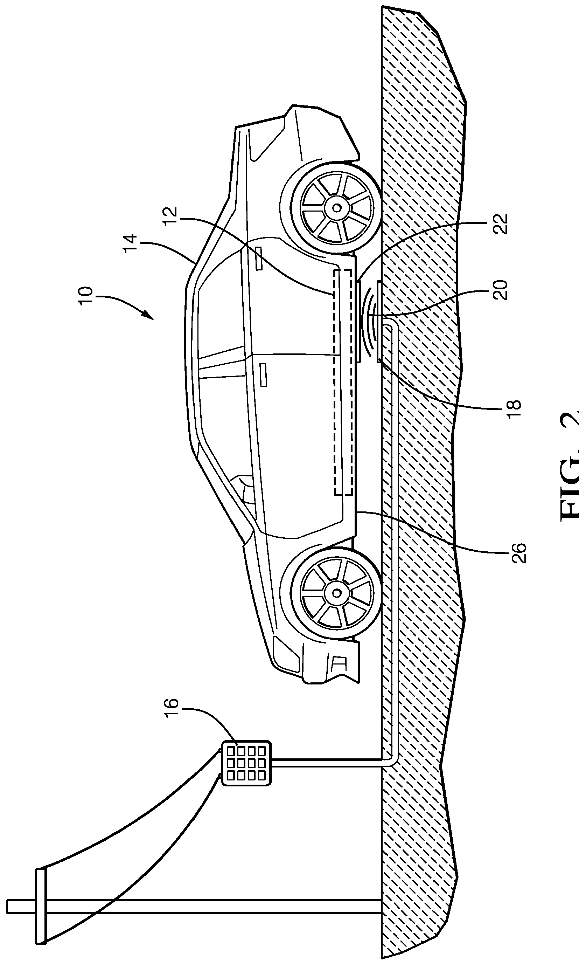

In order to supply the electrical power captured by the capture coil 22 to the battery 12, the system 10 includes a rectifier/filter 24 to convert the alternating current from the capture coil 22 to a non-time variant current and voltage, hereinafter referred to as a direct current and a direct voltage, that can be used to charge the battery 12. As illustrated in Fig. 2, the capture coil 22 is located on the underside 26 of the vehicle 14 and the source coil 18 is located on a surface 28, such as a parking lot or garage floor, under and apart from the vehicle 14.

The power supply 16 is configured to operate in two different power output modes. In a low power output mode, the power supply 16 supplies electrical power in a range of less than 1 watt (W). This provides the benefit of minimizing power consumption until optimum operating parameters are established for the system 10. It also provides the benefit on minimizing the magnetic field 20 around the perimeter of the vehicle 14, allowing additional time for a foreign object detection system to determine whether a metallic or biological object would be exposed to a higher magnetic field 20 during the high power output mode.

The system 10 also includes controller circuitry 30 that is electrical communication with the power supply 16 and is configured to control the output frequency and the power output mode of the power supply 16. The controller circuitry 30 is connected to the power supply 16 by a command communication bus (not shown), such as a Controller Area Network (CAN) bus, Universal Serial Data bus (USB). In alternative embodiments, the controller circuitry 30 may be in wireless communication with the power supply 16, for example using a BLUETOOTH or WIFI wireless communication protocol. The system 10 further includes a first voltage senor 32 and a first current sensor 34 that are in electrical communication with the controller circuitry 30. The first voltage senor 32 and the first current sensor 34 are configured to determine the voltage value (v) and current value (i) of the electrical power output from the power supply 16, preferably the root-means-squared (rms) values of the voltage value and the current value. The controller circuitry 30 is configured to determine an impedance value (z) and a voltage-current phase value (Θ) of the electrical power output of the power supply 16 based on the current value and the voltage value. The impedance is calculated by the formula z = v/i. The voltage-current phase value (Θ) is determined by measuring a time difference between the zero crossing of the voltage value (v) and the current value (i). In alternative embodiments, the first voltage senor 32 and the first current sensor 34 may be in wireless communication with the controller circuitry 30, for example using a BLUETOOTH or WIFI wireless communication protocol.

The controller circuitry 30 includes a central processing unit (not shown) that may be a microprocessor, application specific integrated circuit (ASIC), or may be built from discrete logic and timing circuits (not shown). Software instructions that program the charging controller are stored in a nonvolatile (NV) memory device 36. The NV memory device 36 may be contained within the microprocessor or ASIC as shown or it may be a separate device. Nonlimiting examples of the types of NV memory that may be used include electrically erasable programmable read only memory (EEPROM), masked read only memory (ROM), and flash memory. The controller circuitry 30 also includes a wired transceiver (not shown), such as a controller area network (CAN) transceiver, to allow the controller circuitry 30 to establish electrical communication with the power supply 16 and other devices. In alternative embodiments, the controller circuitry 30 may include a wireless transceiver to communicate with the power supply 16, for example using a BLUETOOTH or WIFI wireless communication protocol. The controller circuitry 30 further includes analog to digital (A/D) and digital to analog (D/A) convertor circuits to allow the controller circuitry 30 to interface with the first voltage and current sensors as well as other input and control circuits.

The system 10 additionally includes a variable resistor 38 located in the vehicle 14 that is electrically coupled to the capture coil 22 and configured to provide a variable resistive load to the capture coil 22. The variable resistor 38 is switchably electrically coupled to the capture coil 22 and the rectifier/filter 24 such that the captured electrical power from the capture coil 22 flows either to the rectifier/filter 24 or to the variable resistor 38. In alternative embodiments of the system, the variable resistor 38 may be switchably electrically coupled the rectifier/filter 24 and the battery 12. The variable resistor 38 is also wirelessly connected to the controller circuitry 30 by a first wireless transceiver 40 that that is electrically coupled to the controller circuitry 30 and a second wireless transceiver 42 that is electrically coupled to the variable resistor 38 and wirelessly connected to the first wireless transceiver 40, for example using a BLUETOOTH or WIFI wireless communication protocol The controller circuitry 30 is further configured to command the variable resistor 38 to change its resistance value sending a command through the first and second transceivers 40, 42. As shown in Fig, 3 the variable resistor 38 is a switched network of resistors having different values and the resistance is varied by opening and closing the various switches according to the commands. The switches are preferably electrically controlled relay switches. The variable resistor 38 is changeable at least between two resistance values, a first resistance value and a second resistance value greater than the first resistance value. The variable resistor 38 also includes control circuitry (not shown) needed to change the resistance value based on commands from the controller circuitry 30. Such control circuitry is well known to those skilled in the art.

The system 10 further includes a second current sensor 44 and a second voltage sensor 46, both of which are in electrical communication with the second transceiver 42. The second current sensor 44 and the second voltage sensor 46 are configured to determine a second current value and a second voltage value of the captured electrical power output from the rectifier/filter 24. These second voltage and second current values are supplied to the controller circuitry 30 via the first and second wireless transceivers 40, 42. In alternative embodiments of the system, the second current sensor 44 and the second voltage sensor 46 may be configured to determine the second current value and the second voltage value of the captured electrical power output from the capture coil 22.

In operation, the first and second transceivers 40, 42 establish wireless WIFI communication to initiate the charging process. The controller circuitry 30 then commands the power supply 16 to enter the low power output mode. This enables the system 10 to verify that the capture coil 22 is in a position relative to the source coil 18 and that is capable of receiving the alternating magnetic field 20 from the source coil 18. While the power supply 16 is in this low power output mode, the controller circuitry 30 commands the variable resistor 38 to decouple the rectifier/filter 24 from the capture coil 22 and establish a first resistance value. While the variable resistor 38 has the first resistance value, the controller circuitry 30 commands the power supply 16 to vary the frequency of the output power within the operating frequency range of the power supply 16. The controller circuitry 30 receives the current values (i) and voltage values (v) while the and calculates the impedance value (z) and the voltage-current phase value (Θ) of the electrical power output. The system 10 control then stores a first frequency at which the impedance value (z) and the voltage-current phase value (Θ) are minimized and the first resistance value associated with the first frequency in the memory device 36. The minimized impedance value (z) and the voltage-current phase value (Θ) is obtained when the source coil 18 and the capture coil 22 are at or near their resonant frequency with the resistive load at the first resistance value, thereby providing maximum power transfer between the source coil 18 and the capture coil 22 with the resistive load at the first resistance value. The controller circuitry 30 then commands the variable resistor 38 to establish a second resistance value. While the variable resistor 38 has the second resistance value, the controller circuitry 30 commands the power supply 16 to again vary the frequency of the output power within the operating frequency range of the power supply 16. The controller circuitry 30 again calculates the impedance value (z) and the voltage-current phase value (Θ) of the electrical power output, thereby providing maximum power transfer between the source coil 18 and the capture coil 22 with the resistive load at the second resistance value. The controller circuitry 30 then stores a second frequency at which the impedance value (z) and the voltage-current phase value (Θ) are minimized and the second resistance value associated with the second frequency in the memory device 36. This process may be repeated several more times at different resistance values, including with no load resistance, i.e. the resistance value is infinite because it is an open circuit.

After the controller circuitry 30 finishes sweeping the frequency for each of the resistance values of the variable resistor 38, the controller circuitry 30 then commands the variable resistor 38 to decouple from the capture coil 22 and recouple the capture coil 22 to the rectifier/filter 24 and then commands the power supply 16 to enter the high power mode. The second current and voltage sensors connected to the capture coil 22 send the second current and voltage values to the controller circuitry 30 via the first and second wireless transceivers. The controller circuitry 30 then calculate an equivalent load resistance based upon the second current and voltage values. The controller circuitry 30 subsequently commands the power supply 16 to use an output frequency selected from the stored frequencies has an associated resistance value closest to the current equivalent load resistance.

Preferably, the controller circuitry 30 commands the power supply 16 to begin with the recorded frequency of the no-load resistance and as the output power is increased, the controller circuitry 30 adjusts the frequency of the power supply 16 as the equivalent load resistance changes by using other recorded frequencies substantially equal to the currently calculated equivalent load resistance.

In a particular example of a 11 kW electrical charging system 10, the voltage of the battery 12, and therefore the capture coil 22, can vary from 280 volts (V) to 420 V. The system 10 is configured to have a maximum current rating of 30 amperes (A), so the minimum equivalent load resistance is 280 V/30 A = 9.3 ohms (Ω) when the battery 12 is at 280 V. The expected power output during charging is 500 W when the battery 12 is at 420 V, therefore the maximum equivalent load resistance is (420 V)²/500 W = 353 Ω. Accordingly, the minimum and maximum resistance values of the variable resistor 38 may be calculated using the formulae:
- Min. equivalent load resistance = min. battery voltage/max. output current; and
- Max. equivalent load resistance = (max. battery voltage)²/min. output current.

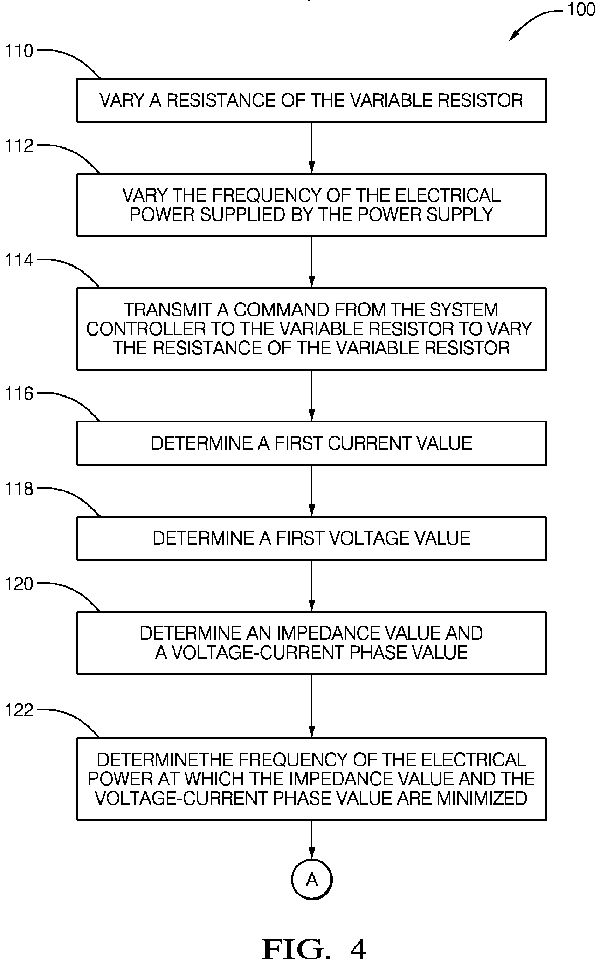

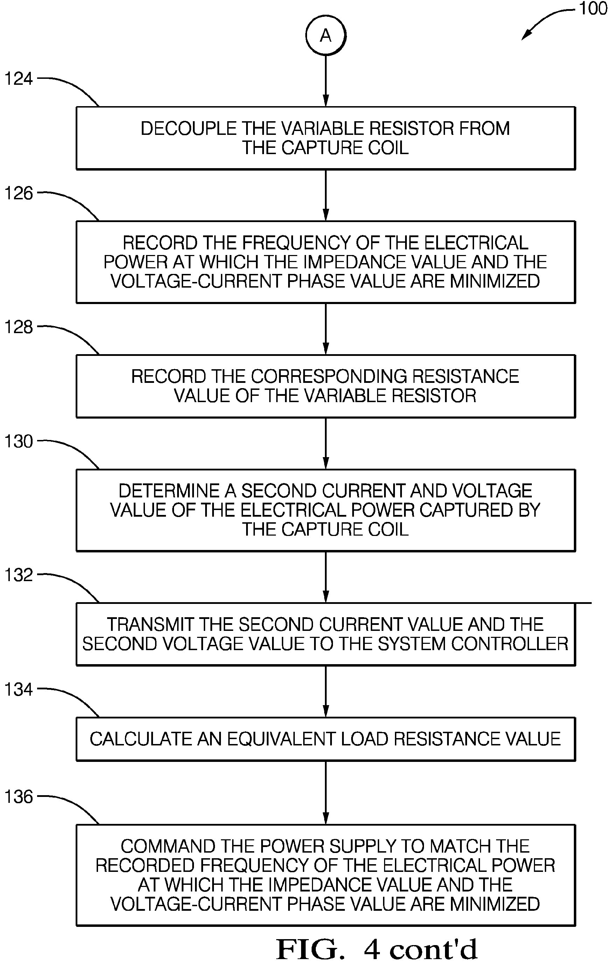

Fig. 4 illustrates an example of a method 100 of operating an electrical charging system 10 to wirelessly charge an energy storage device. The system 10 has a power supply 16 configured to source an electrical power having a frequency, a source coil 18 in electrical communication with the power supply 16 and configured to generate an alternating magnetic field 20, a capture coil 22 magnetically coupled to the source coil 18, thereby inducing the capture coil 22 to capture electrical power from the alternating magnetic field 20, a variable resistor 38 switchably coupled to the capture coil 22 configured to provide a variable resistive load to the capture coil 22, and controller circuitry 30 in electrical communication with the power supply 16. The variable resistor 38 is changeable between a first resistance value and a second resistance value greater than the first resistance value. The power supply 16 is configured to supply the electrical power at a first power value or at a second power value that is higher than the first power value and wherein the controller circuitry 30 is configured to command the power supply 16 to supply the electrical power at the first power value or at the second power value. The controller circuitry 30 commands the variable resistor 38 to vary the resistance of the variable resistor 38 and commands the power supply 16 to vary the frequency of the electrical power when the power supply 16 is supplying the alternating current at the first power value. The first power value is less than 1 watt. The controller circuitry 30 also commands the power supply 16 to vary the frequency of the electrical power when the power supply 16 is supplying the electrical power at the second power value.

The system 10 also includes a first transceiver 40 in electrical communication with the variable resistor 38 and a second transceiver 42 in electrical communication with the controller circuitry 30 and in wireless communication with the first transceiver 40. The system 10 additionally includes a first current sensor 34 in electrical communication with the controller circuitry 30 and a first voltage sensor in electrical communication with the controller circuitry 30. The system 10 further includes a second current sensor 44 in electrical communication with the second transceiver 42 and a second voltage sensor 46 in electrical communication with the second transceiver 42. The method 100 include the following steps.

STEP 110, VARY A RESISTANCE OF THE VARIABLE RESISTOR, includes varying a resistance of the variable resistor 38 in response to a command from the controller circuitry 30 to the variable resistor 38.

STEP 112, VARY THE FREQUENCY OF THE ELECTRICAL POWER SUPPLIED BY THE POWER SUPPLY, includes varying the frequency of the electrical power supplied by the power supply 16 in response to a command from the controller circuitry 30 to the power supply 16.

STEP 114, TRANSMIT A COMMAND FROM THE CONTROLLER CIRCUITRY TO THE VARIABLE RESISTOR TO VARY THE RESISTANCE OF THE VARIABLE RESISTOR, includes transmitting a command from the controller circuitry 30 to the variable resistor 38 to vary the resistance of the variable resistor 38 via the first and second transceivers.

STEP 116, DETERMINE A FIRST CURRENT VALUE, includes determining, via the first current sensor 34, a first current value of the electrical power sourced by the power supply 16.

STEP 118, DETERMINE A FIRST VOLTAGE VALUE, includes determining, via the first voltage sensor, a first voltage value of a voltage of the electrical power sourced by the power supply 16.

STEP 120, DETERMINE AN IMPEDANCE VALUE AND A VOLTAGE-CURRENT PHASE VALUE, includes determining, via the controller circuitry 30, an impedance value and a voltage-current phase value based on the first current value and the first voltage value.

STEP 122, DETERMINE THE FREQUENCY OF THE ELECTRICAL POWER AT WHICH THE IMPEDANCE VALUE AND THE VOLTAGE-CURRENT PHASE VALUE ARE MINIMIZED, includes determining, via the controller circuitry 30, the frequency of the electrical power at which the impedance value and the voltage-current phase value are minimized.

STEP 124, DECOUPLE THE VARIABLE RESISTOR FROM THE CAPTURE COIL, includes decoupling the variable resistor 38 from the capture coil 22 in response to a command from the controller circuitry 30 to the variable resistor 38 when the power supply 16 is supplying the electrical power at the second power value.

STEP 126, RECORD THE FREQUENCY OF THE ELECTRICAL POWER AT WHICH THE IMPEDANCE VALUE AND THE VOLTAGE-CURRENT PHASE VALUE ARE MINIMIZED, includes recording the frequency of the electrical power at which the impedance value and the voltage-current phase value are minimized for the instant resistance of the controlled variable resistance in a memory device 36 electrically coupled to the controller circuitry 30.

STEP 128, RECORD THE CORRESPONDING RESISTANCE VALUE OF THE VARIABLE RESISTOR, includes recording the corresponding resistance value of the variable resistor 38 in the memory device 36.

STEP 130, DETERMINE A SECOND CURRENT AND VOLTAGE VALUE OF THE ELECTRICAL POWER CAPTURED BY THE CAPTURE COIL, includes determining, via the second current sensor 44 and the second voltage sensor 46, a second voltage value and a second current value of the electrical power captured by the capture coil 22.

STEP 132, TRANSMIT THE SECOND CURRENT VALUE AND THE SECOND VOLTAGE VALUE TO THE CONTROLLER CIRCUITRY, includes transmitting the second current value and the second voltage value to the controller circuitry 30 via the first and second transceivers.

STEP 134, CALCULATE AN EQUIVALENT LOAD RESISTANCE VALUE, includes calculating, via the controller circuitry 30, an equivalent load resistance value based on the second current value and the second voltage value.

STEP 136, COMMAND THE POWER SUPPLY TO MATCH THE RECORDED FREQUENCY OF THE ELECTRICAL POWER AT WHICH THE IMPEDANCE VALUE AND THE VOLTAGE-CURRENT PHASE VALUE ARE MINIMIZED, includes commanding, via the controller circuitry 30 the frequency of the power supply 16 to match the recorded frequency of the electrical power at which the impedance value and the voltage-current phase value are minimized for the instant resistance when the equivalent load resistance value is substantially equal to the recorded corresponding resistance value and when the power supply 16 is supplying the electrical power at the second power value.

Accordingly, an electrical charging system 10 and a method 100 of controlling such a system 10 is provided. The system 10 and method 100 provide the advantages of providing a system 10 that can automatically characterize the impedance characteristics of the magnetically coupled source coil 18 and capture coil 22 over a range of different resistive loads as are experienced by the system 10 during the charging process and automatically adjust the frequency of the power supply 16 to maximize power transfer between the source coil 18 and the capture coil 22.

While the examples contained herein have referred to the use of an electrical charging system 10 to charge a battery 12 in an electric or hybrid electric vehicle 14 the system 10 and method 100 described herein may be applied to any other wireless power transfer for charging a battery or other energy storage devices, such as wirelessly charging a battery in a portable electronic device, e.g. cellular telephone or tablet computer.

While this invention has been described in terms of the preferred embodiments thereof, it is not intended to be so limited, but rather only to the extent set forth in the claims that follow. For example, the above-described embodiments (and/or aspects thereof) may be used in combination with each other. In addition, many modifications may be made to configure a particular situation or material to the teachings of the invention without departing from its scope. Dimensions, types of materials, orientations of the various components, and the number and positions of the various components described herein are intended to define parameters of certain embodiments, and are by no means limiting and are merely prototypical embodiments.

Many other embodiments and modifications within the spirit and scope of the claims will be apparent to those of skill in the art upon reviewing the above description. The scope of the invention should, therefore, be determined with reference to the following claims, along with the full scope of equivalents to which such claims are entitled.

In the following claims, the terms "including" and "in which" are used as the plain-English equivalents of the respective terms "comprising" and "wherein." Moreover, the use of the terms first, second, etc. does not denote any order of importance, but rather the terms first, second, etc. are used to distinguish one element from another. Furthermore, the use of the terms a, an, etc. do not denote a limitation of quantity, but rather denote the presence of at least one of the referenced items. Additionally, directional terms such as upper, lower, etc. do not denote any particular orientation, but rather the terms upper, lower, etc. are used to distinguish one element from another and locational establish a relationship between the various elements.

## Claims

1. An electrical charging system (10) configured to wirelessly charge an energy storage device (12), comprising:
a power supply (16) configured to source electrical power having a frequency;
a source coil (18) in electrical communication with the power supply (16) and configured to generate an alternating magnetic field (20);
a capture coil (22) magnetically coupled to said source coil (18), thereby inducing the capture coil (22) to capture electrical power from the alternating magnetic field (20);
a variable resistor (38) switchably coupled to the capture coil (22) configured to provide a variable resistive load to the capture coil (22); and
controller circuitry (30) communicatively coupled with the power supply (16) and configured to command the variable resistor (38) to vary a resistance of the variable resistor (38) and configured to command the power supply (16) to vary the frequency of the electrical power.

2. The electrical charging system (10) according to claim 1, further comprising:
a first transceiver (40) communicatively coupled with the variable resistor (38); and
a second transceiver (42) communicatively coupled with the controller circuitry (30) and in wireless communication with the first transceiver (40), wherein the controller circuitry (30) is configured to command the variable resistor (38) to vary the resistance of the variable resistor (38) via the first and second transceivers (40, 42).

3. The electrical charging system (10) according to any preceding claim, further comprising:
a current sensor (34) communicatively coupled with the controller circuitry (30) and configured to determine a current value of the electrical power sourced by the power supply (16); and
a voltage sensor (32) communicatively coupled with the controller circuitry (30) and configured to determine an voltage value of the electrical power sourced by the power supply (16), wherein the controller circuitry (30) is configured to determine an impedance value and a voltage-current phase value based on the current value and the voltage value.

4. The electrical charging system (10) according to any preceding claim, wherein the power supply (16) is configured to supply the electrical power at a first power value or at a second power value that is higher than the first power value and wherein the controller circuitry (30) is configured to command the power supply (16) to supply the electrical power at the first power value or at the second power value.

5. The electrical charging system (10) according to claim 4, wherein the controller circuitry (30) commands the variable resistor (38) to vary the resistance of the variable resistor (38), wherein the variable resistor (38) is changeable between a first resistance value and a second resistance value that is greater than the first resistance value,. and wherein the controller circuitry (30) commands the power supply (16) to vary the frequency of the electrical power when the power supply (16) is supplying the electrical power at the first power value, wherein the first power value is less than 1 watt.

6. The electrical charging system (10) according to any of claims 4-5, wherein the controller circuitry (30) commands the variable resistor (38) to decouple from the capture coil (22) when the power supply (16) is supplying the electrical power at the second power value.

7. The electrical charging system (10) according to any of claims 4-6, wherein the controller circuitry (30) commands the power supply (16) to vary the frequency of the electrical power when the power supply (16) is supplying the electrical power at the second power value.

8. The electrical charging system (10) according to any preceding claim, wherein the controller circuitry (30) is configured to determine the frequency of the electrical power at which the impedance value and the voltage-current phase value are minimized.

9. A method (100) of operating an electrical charging system (10) to wirelessly charge an energy storage device (12), said electrical charging system (10) having a power supply (16) configured to source an electrical power having a frequency, a source coil (18) in electrically coupled with the power supply (16) and configured to generate an alternating magnetic field (20), a capture coil (22) magnetically coupled to said source coil (18), thereby inducing the capture coil (22) to capture electrical power from the alternating magnetic field (20), a variable resistor (38) switchably coupled to the capture coil (22) configured to provide a variable resistive load to the capture coil (22), and controller circuitry (30) communicatively coupled with the power supply (16), said method (100) comprising the steps of:
varying (110) a resistance of the variable resistor (38) in response to a command from the controller circuitry (30) to the variable resistor (38); and
varying (112) the frequency of the electrical power supplied by the power supply (16) in response to a command from the controller circuitry (30) to the power supply (16).

10. The method (100) according to claim 9, wherein the electrical charging system (10) further comprises a first transceiver (40) communicatively coupled with the variable resistor (38) and a second transceiver (42) communicatively coupled with the controller circuitry (30) and in wireless communication with the first transceiver (40), wherein the method (100) further includes the step (114) of transmitting a command from the controller circuitry (30) to the variable resistor (38) to vary the resistance of the variable resistor (38) via the first and second transceivers (40, 42).

11. The method (100) according to any of claim 9-10, wherein the electrical charging system (10) further comprises a first current sensor (34) communicatively coupled with the controller circuitry (30) and a first voltage sensor (32) communicatively coupled with the controller circuitry (30) and wherein the method (100) further includes the steps of:
determining (116), via the first current sensor (34), a first current value of the electrical power sourced by the power supply (16);
determining (118), via the first voltage sensor (32), a first voltage value of a voltage of the electrical power sourced by the power supply (16); and
determining, via the controller circuitry (30), an impedance value and a voltage-current phase value based on the first current value and the first voltage value.

12. The method (100) according to claim 10, wherein the power supply (16) is configured to supply the electrical power at a first power value or at a second power value that is higher than the first power value and wherein the controller circuitry (30) is configured to command the power supply (16) to supply the electrical power at the first power value or at the second power value, wherein the step (114) of varying the resistance of the variable resistor (38) is performed when the power supply (16) is supplying an alternating current at the first power value, wherein the variable resistor (38) is changeable between a first resistance value and a second resistance value greater than the first resistance value, wherein the first power value is less than 1 watt.

13. The method (100) according to claim 12, wherein the method (100) further includes the step (124) of decoupling the variable resistor (38) from the capture coil (22) in response to a command from the controller circuitry (30) to the variable resistor (38) when the power supply (16) is supplying the electrical power at the second power value.

14. The method (100) according to any of claims 12-13, wherein the controller circuitry (30) commands the power supply (16) to vary the frequency of the electrical power when the power supply (16) is supplying the electrical power at the second power value.

15. The method (100) according to any of claims 10-14, wherein the electrical charging system (10) further comprises a second current sensor (44) communicatively coupled with the second transceiver (42) and a second voltage sensor (46) communicatively coupled with the second transceiver (42) and wherein the method (100) further comprises the steps of: determining (122), via the controller circuitry (30), the frequency of the electrical power at which the impedance value and the voltage-current phase value are minimized
recording (128) the frequency of the electrical power at which the impedance value and the voltage-current phase value are minimized for an instant resistance of the variable resistor (38) in a memory device (36) electrically coupled to the controller circuitry (30); and recording a corresponding resistance value of the variable resistor (38) in the memory device (36)
determining (130), via the second current sensor (44), a second current value of the electrical power captured by the capture coil (22);
determining (132), via the second voltage sensor (46), a second voltage value of the voltage of the electrical power captured by the capture coil (22);
transmitting (134) the second current value and the second voltage value to the controller circuitry (30) via the first and second transceivers (40, 42);
calculating (134), via the controller circuitry (30), an equivalent load resistance value based on the second current value and the second voltage value; and
commanding (136), via the controller circuitry (30) the frequency of the power supply (16) to match a recorded frequency of the electrical power at which the impedance value and the voltage-current phase value are minimized for an instant resistance of the variable resistor (38) when the equivalent load resistance value is substantially equal to a recorded corresponding resistance value and when the power supply (16) is supplying the electrical power at the second power value.
